# FASCICULE DE BREVET EUROPEEN

(11) **EP 0 551 470 B1**
(45) Date de publication et mention de la délivrance du brevet: **21.06.1995**
(21) Numéro de dépôt: 92916201.4
(22) Date de dépôt: 08.07.1992
(51) Int. Cl.: B60C 23/04

(54) **FIXATION ELASTIQUE D'UNE ANTENNE SUR SON SUPPORT, DANS UN DISPOSITIF DE SURVEILLANCE DES PNEUMATIQUES**
Elastische Befestigung einer Halterung mit einer Antenne einer Reifendrucküberwachungsvorrichtung
RESILIENT ATTACHMENT OF A SUPPORT OF AN ANTENNA OF A TYRE MONITORING DEVICE

(30) Priorité: 08.08.1991 FR 9110226
(43) Date de publication de la demande: 21.07.1993
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: GESTA, Jean-Louis, F-63119 Chateaugay (FR)
(74) Mandataire: Bauvir, Jacques
(86) Numéro de dépôt international: FR9200653
(87) Numéro de publication internationale: WO9302874

(56) Documents cités:
- GB-A- 821 385
- US-A- 2 554 594

## Description

La présente invention concerne ceux des dispositifs de surveillance de la pression des pneumatiques qui utilisent des antennes pour transmettre des signaux électriques entre la roue et le véhicule.

L'absence de transmission par contact galvanique continu impose de monter une antenne tournante, mécaniquement reliée à la roue dans la rotation de celle-ci, et une antenne dite fixe, mécaniquement reliée à un élément non mobile en rotation dans le porte-roue. Ces antennes assurent la communication entre ce que l'on conviendra d'appeler "l'espace mobile en rotation" et "l'espace fixe".

Le "porte-roue" est l'ensemble des pièces mécaniques non suspendues, comportant à la fois des pièces mobiles en rotation et des pièces non mobiles en rotation. L'antenne tournante peut être implantée directement sur la roue, ou bien sur la partie mobile en rotation du porte-roue.

L'antenne elle-même comporte un corps réalisé en matériau isolant, par exemple en polyamide, et un moyen électrique de couplage en matériau conducteur ; par exemple, le moyen électrique de couplage est une bobine en cas de couplage inductif, et il s'agit d'une armature de condensateur en cas de couplage capacitif. Destinées à être montées dans des solides ayant une symétrie de révolution, ces antennes sont souvent des solides axisymétriques, à quelques détails d'exécution près, et sont implantées de façon coaxiale sur la roue, ou sur le moyeu, ou dans un tambour de frein, ou sur une fusée. La présente invention se rapporte à la fixation de ce type d'antenne, implantée de façon coaxiale sur la roue ou sur le porte-roue.

Ces antennes sont disposées dans un milieu sévère, particulièrement agressif. La fixation de ces antennes doit résister aux chocs et vibrations dues au roulage, chocs et vibrations qui ne sont pas filtrés par les suspensions puisque ces antennes sont montées sur les organes non suspendus des véhicules. En outre, du fait de leur implantation dans les roues ou porte-roues, la fixation de ces antennes doit encore supporter des dilatations thermiques différentielles dues aux dégagements de chaleur par les freins.

Jusqu'à présent, ces antennes sont fixées par serrage, ou bien le corps de l'antenne comporte des pattes ou des tétons moulés d'un seul bloc avec celui-ci. Ce sont ces pattes ou ces tétons qui ont une flexibilité suffisante pour pouvoir se déformer au montage, et assurer le maintien de l'antenne sur son support.

La présente invention vise à améliorer la fiabilité de la fixation de ces antennes. En particulier, elle a pour objectif de prévoir un mode de fixation qui résiste aux sollicitations mécaniques provoquées par les chocs les plus importants, qui résiste aux sollicitations thermiques sévères, sans que l'installation sur le véhicule n'impose de modifications significatives de la conception des porte-roues et/ou des roues. En outre, l'opération de montage de l'antenne sur son support (dans le porte-roue ou sur la roue) doit être aussi simple et aussi brève que possible.

L'antenne selon l'invention, pour le couplage sans contact galvanique entre l'espace mobile en rotation et l'espace fixe, dans un dispositif de surveillance des pneumatiques d'un véhicule, ladite antenne étant constituée par un corps en matériau isolant supportant un moyen électrique de couplage en matériau conducteur, ledit corps ayant une face de montage cylindrique, ladite antenne étant destinée à être montée dans un logement cylindrique de l'espace fixe ou de l'espace mobile en rotation, ledit logement cylindrique correspondant à ladite face de montage cylindrique, est caractérisée en ce que
- la face de montage cylindrique est dimensionnée de façon à s'ajuster par rapport au logement cylindrique en laissant subsister un jeu,
- le corps de l'antenne comporte une rainure périphérique continue ou non, usinée sur la face de montage,
- le logement cylindrique comporte une zone d'ancrage formant une ou plusieurs cavités sur ledit logement cylindrique, destinées à venir en correspondance avec ladite rainure périphérique,
- l'antenne comporte un jonc élastique engagé dans ladite rainure, susceptible de s'effacer pour permettre le montage de l'antenne sur ledit logement cylindrique, puis, par expansion, de s'engager dans ladite zone d'ancrage pour immobliser l'antenne sur son logement cylindrique.

Les figures suivantes, données à titre purement illustratif, permettent de bien comprendre l'invention :
- La figure 1 est une coupe méridienne d'une première variante de réalisation de l'antenne.
- La figure 2 est un agrandissement de la figure 1.
- La figure 3 est une coupe perpendiculaire à l'axe de rotation illustrant une deuxième variante de réalisation de l'antenne.
- La figure 4 est un agrandissement de cette deuxième variante.
- La figure 5 est une vue selon la flèche V aux figures 3 et 4.
- La figure 6 est une coupe selon VI VI à la figure 4.
- La figure 7 est une coupe selon VII VII à la figure 4.
- La figure 8 est une vue détaillée d'une troisième variante.
- La figure 9 est une coupe selon IX IX à la figure 8.
- La figure 10 est une vue détaillée d'une quatrième variante.
- La figure 11 est une coupe selon XI XI à la figure 10.

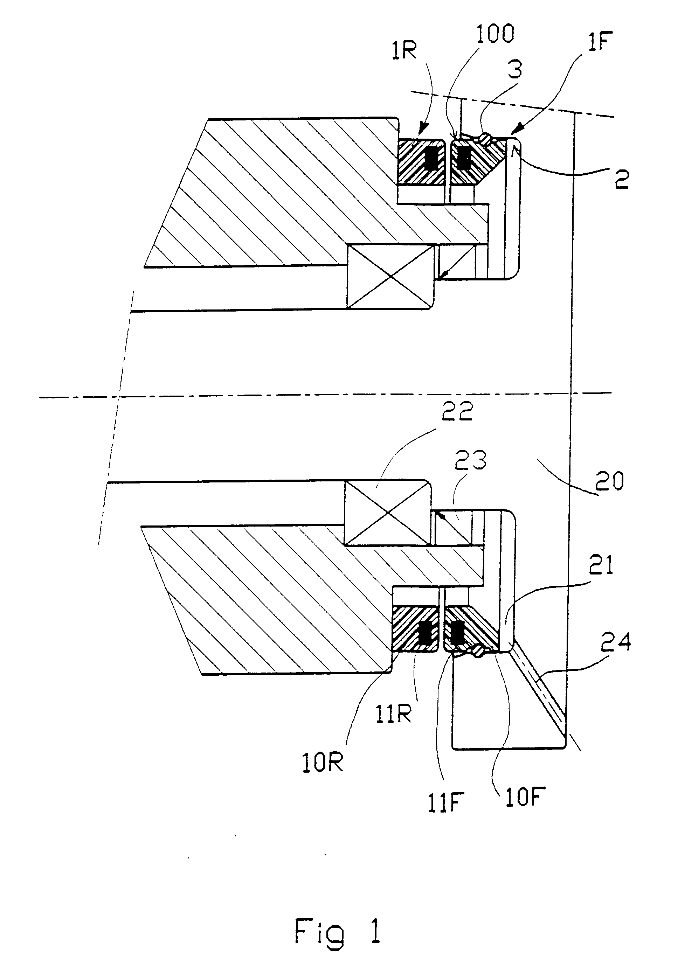

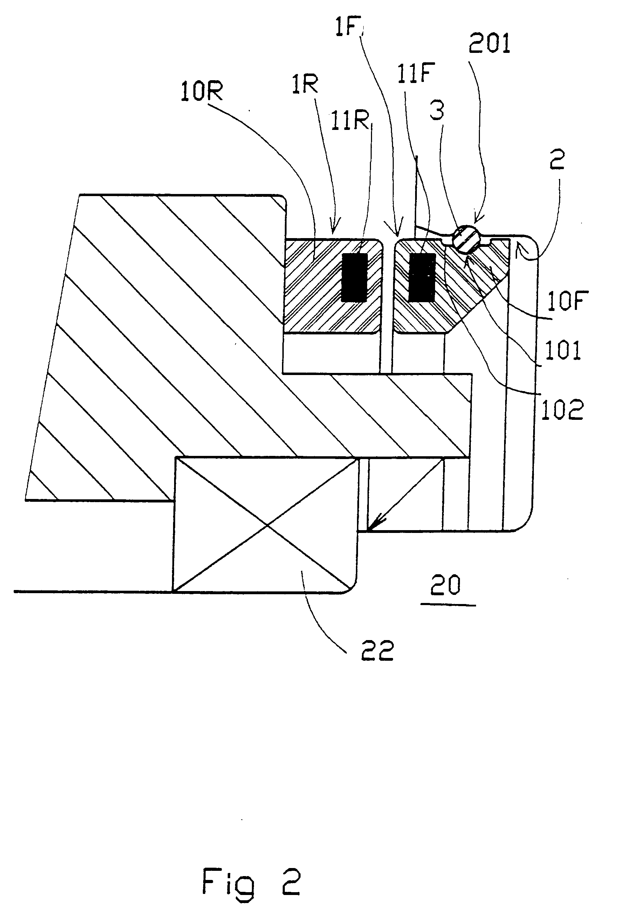

Aux différentes figures, on aperçoit une antenne 1 constituée par un support en matériau isolant (corps) 10, et un moyen électrique de couplage, constitué dans ces exemples par une bobine 11 noyée dans le support 10. Aux figures 1 et 2, l'antenne liée à l'espace fixe est désignée par une référence portant l'indice F et l'antenne liée à l'espace mobile en rotation est désignée par une référence portant l'indice R. L'invention traite de la fixation des antennes, et est applicable aussi bien à la fixation dans l'espace fixe, que dans l'espace mobile en rotation.

Le logement cylindrique 2 sur lequel on monte l'antenne 1 apparaît aux différentes figures. Pour le montage, on présente chaque fois la face de montage cylindrique 100 de l'antenne 1 en concordance avec ledit logement cylindrique 2. Dans la première variante, ce logement cylindrique 2 est prévu sur le porte-moyeu 20.

Le jonc élastique de l'invention est constitué, dans les variantes illustrées par les figures 1 et 2, par un joint d'étanchéité torique 3. Pour assembler deux pièces circulaires l'une dans l'autre, on utilise un joint torique 3 qui, lorsqu'il est en place, fait office de barrière d'étanchéité et d'arrêt mécanique transversal. Le joint 3 est prémonté sur l'antenne 1F, dans une gorge 101 réalisée sur le support 10F.

La gorge 101 est réalisée dans une rainure 102 plus large, ménageant un volume suffisant pour absorber le volume du joint torique 3 qui est écrasé lorsque l'on insère l'antenne 1F sous le logement cylindrique de montage 2, tant que le joint torique 3 ne s'est pas positionné dans une zone d'ancrage formant une cavité correspondante du logement cylindrique 2, constitué ici par une gorge 201 réalisée sur ledit logement de montage cylindrique 2.

Les cotes d'usinage sont calculées pour que le joint exerce une certaine pression sur les gorges 201 et 101 de manière à assurer l'étanchéité et à offrir une résistance suffisante au cisaillement à un effort transversal donné, et ceci dans toutes les configurations que peuvent prendre les différentes pièces mécaniques en tenant compte des dilatations différentielles correspondant aux conditions d'utilisation.

Dans cette première variante, l'antenne elle-même coopère avec ledit logement cylindrique 2 pour former un bac de récolte 21 des lubrifiants s'échappant toujours des roulements 22 présents dans le porte-roue, malgré la barrière d'étanchéité 23 prévue. Les lubrifiants ainsi récoltés peuvent quitter le bac de récolte 21 par la canalisation 24.

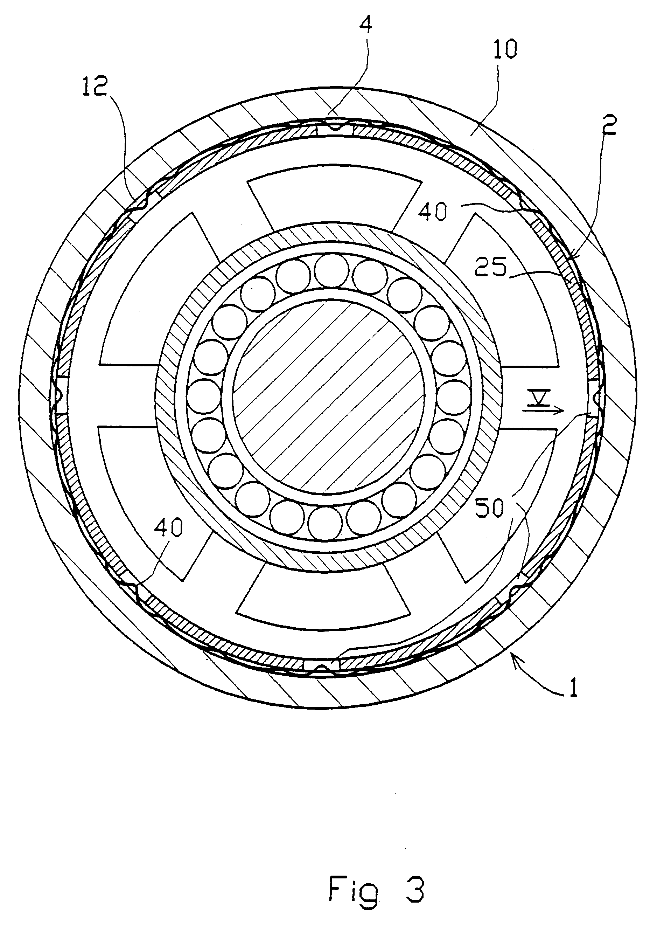

Le jonc de la deuxième variante de réalisation (figure 3) est constitué par un ressort 4 d'allure générale circulaire, formé à partir d'une tige profilée comportant des ondulations orientées toutes dans la même direction. Un tel ressort peut être placé entre deux plans séparés d'une distance correspondant exactement à l'épaisseur du profilé dans la direction perpendiculaire aux ondulations. Cette variante se rapporte au montage de l'antenne 1 à l'intérieur du moyeu d'un véhicule Poids Lourd. La pièce métallique 25 est ici une entretoise rapportée que l'on peut disposer en fonction de la place disponible dans les moyeus de chaque véhicule. La pièce métallique 25 pourrait aussi être une pièce existante si l'on peut usiner les cavités 50 nécessaires à l'invention. La difficulté est d'assurer la fixation d'une antenne 1 en matière plastique sur une pièce métallique 25, en sachant que les coefficients de dilatation sont très différents dans la plage de température prévue en fonctionnement, et en minimisant les contraintes mécaniques sur le support 10 en matière plastique.

Le ressort 4 plat, intercalé entre la pièce métallique 25 et l'antenne 1 plastique, présente un profil étudié pour offrir des zones de flexibilités différentes aux différentes positions circonférentielles, pour d'une part faciliter le montage et d'autre part assurer des efforts suffisants et répartis sur les deux pièces à assembler pour s'opposer à un éventuel couple de rotation. L'immobilisation transversale est assurée par la rigidité transversale du ressort 4, qui, sur le support 10, est encastré dans une saignée 12 circulaire continue de largeur légèrement supérieure au ressort, et dont le diamètre extérieur est calculé en fonction de l'amplitude du profil transversal du ressort.

Quant à la zone d'ancrage permettant d'immobiliser l'antenne sur son support, elle peut être constituée par plusieurs cavités ponctuelles 50 toutes disposées sur le logement cylindrique 2 de la pièce métallique 25, dans un même plan perpendiculaire à l'axe de rotation dudit logement cylindrique 2. Certaines des ondulations du ressort 4 forment des pics 40 s'engageant dans ledites cavités ponctuelles 50.

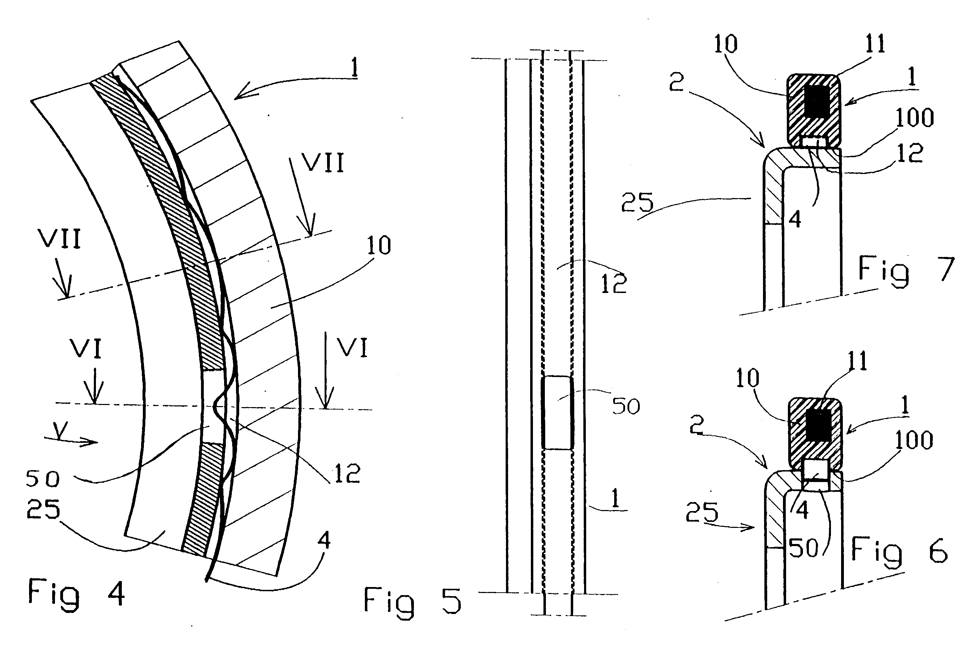

A la figure 3, on voit que ces cavités ponctuelles 50 sont constituées par les lumières réparties à la périphérie de la pièce métallique 25 faisant ici partie du moyeu. La largeur desdites lumières est légèrement supérieure à celle du ressort 4. La longueur de ces lumières est suffisante pour s'affranchir de la variation du développement du ressort 4 lors du montage de l'ensemble. Les différents plans de coupes des figures 6 et 7 permettent de bien voir la position prise par le ressort 4 dans une cavité 50, et dans la saignée 12.

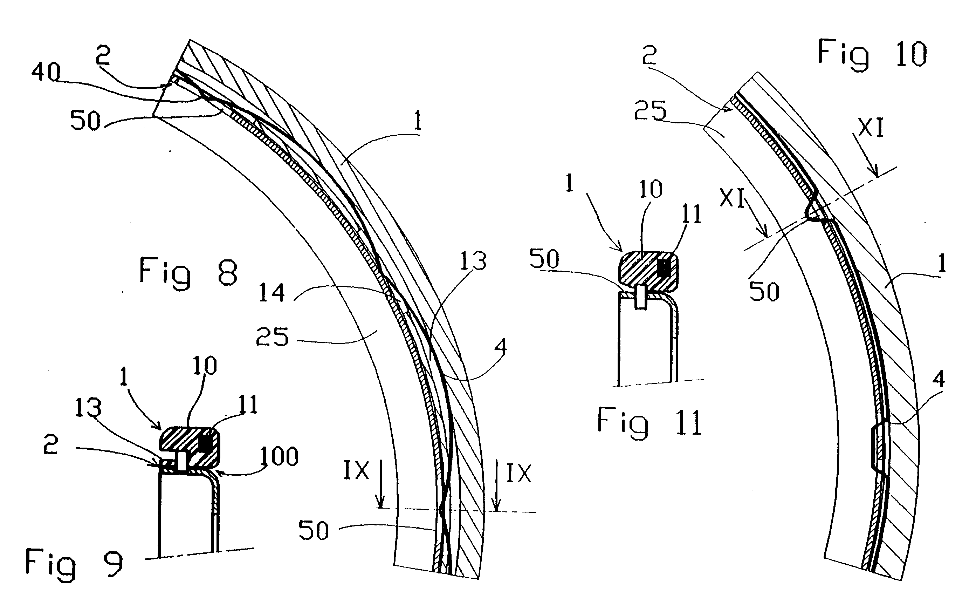

La troisième variante réalisation, représentée aux figures 8 et 9, se distingue en ce que le ressort 4 est prémonté sur l'antenne 1. Une rainure 13 a été réalisée sur une face latérale par rapport à la face de montage cylindrique 100. Des découpures 14 permettent d'engager les pics 40 du ressort 4, lorsqu'on insère celui-ci dans la rainure 13. L'immobilisation du ressort 4 sur le support 10 est assurée par le fait que la découpure 14 ne débouche pas transversalement : c'est un trou dans lequel on engage le pic 40 corespondant.

Au montage de l'antenne 1 sur la pièce métallique 5, il suffit que, par la souplesse du ressort 4, les pics 40 s'esquivent tant qu'ils n'ont pas pénétré dans les cavités 50 prévues sur la pièce 5, tout comme dans l'exemple précédent.

Pour des applications différentes, le montage peut être inversé, c'est-à-dire que la pièce métallique est à l'extérieur et l'antenne à fixer à l'intérieur. De même, le ressort 4 peut être prémonté sur le logement cylindrique 2.

Par ailleurs, le matériau constituant le ressort 4 peut être choisi dans des matières synthétiques ou métalliques. Les lumières usinées sur la partie métallique support peuvent être des emboutis de profondeur suffisante.

Cette technique de montage convient tout particulièrement bien pour fixer les antennes dans les moyeux, par exemple du côté intérieur du véhicule sur le porte moyeu (comme dans l'exemple de la figure 1) ou bien du côté extérieur du véhicule. Dans le cas d'une roue non motrice, on peut implanter l'antenne fixe en bout de fusé, et l'antenne mobile en rotation sur un enjoliveur attaché à la roue.

## Revendications

1. Antenne (1, 1F, 1R) pour le couplage sans contact galvanique entre l'espace mobile en rotation et l'espace fixe, dans un dispositif de surveillance des pneumatiques d'un véhicule, ladite antenne étant constituée par un corps (10) en matériau isolant supportant un moyen électrique de couplage (11) en matériau conducteur, ledit corps (10) ayant une face de montage cylindrique (100), ladite antenne (1) étant destinée à être montée dans un logement cylindrique (2) de l'espace fixe ou de l'espace mobile en rotation, ledit logement cylindrique (2) correspondant à ladite face de montage cylindrique (100), caractérisée en ce que
- la face de montage cylindrique (100) est dimensionnée de façon à s'ajuster par rapport au logement cylindrique (2) en laissant subsister un jeu,
- le corps (10) de l'antenne (1) comporte une rainure (102; 12) périphérique continue ou non, usinée sur la face de montage,
- le logement cylindrique (2) comporte une zone d'ancrage formant une ou plusieurs cavités (201; 50) sur ledit logement cylindrique (2), destinées à venir en correspondance avec ladite rainure (102; 12) périphérique,
- l'antenne comporte un jonc élastique (3; 4) engagé dans ladite rainure, susceptible de s'effacer pour permettre le montage de l'antenne (1) sur ledit logement cylindrique (2), puis, par expansion, de s'engager dans ladite zone d'ancrage pour immobliser l'antenne (1) sur son logement cylindrique (2).

2. Antenne selon la revendication 1, caractérisée en ce que le jonc élastique (3; 4) est constitué par un joint d'étanchéité torique (3), et en ce que ladite zone d'ancrage est une gorge périphérique (201) recevant ledit joint d'étanchéité torique (3).

3. Antenne selon la revendication 2, caractérisée en ce qu'elle coopère avec ledit logement cylindrique (2) pour former un bac de récolte (21) des lubrifiants s'échappant des roulements (22) présents dans le porte-roue.

4. Antenne selon la revendication 3, caractérisée en ce que le corps (10) de l'antenne (1) comporte un chanfrein réalisé sur la face opposée à la face de montage.

5. Antenne selon la revendication 1, caractérisée en ce que le jonc élastique (3; 4) est constitué par un ressort d'allure générale circulaire (4) formé à partir d'une tige profilée, comportant des ondulations.

6. Antenne selon la revendication 5, caractérisé en ce que ladite zone d'ancrage est constituée par plusieurs cavités ponctuelles (50) toutes disposées sur le logement cylindrique (2) dans un même plan perpendiculaire à l'axe de rotation dudit logement cylindrique (2), et en ce que certaines des ondulations du ressort (4) forment des pics (40) s'engageant dans lesdites cavités ponctuelles (50).

## Claims

1. An antenna (1, 1F, 1R) for the coupling without galvanic contact between the space which is mobile in rotation and the fixed space, in a monitoring device for the tyres of a vehicle, said antenna being formed by a body (10) of insulating material supporting an electric coupling means (11) made of conductive material, said body (10) having a cylindrical mounting face (100), said antenna (1) being intended to be mounted in a cylindrical housing (2) in the fixed space or in the space which is mobile in rotation, said cylindrical housing (2) corresponding to said cylindrical mounting face (100), characterised in that
- the cylindrical mounting face (100) is dimensioned so as to fit with respect to the cylindrical housing (2), leaving a gap,
- the body (10) of the antenna (1) comprises a peripheral channel (102; 12), which may or may not be continuous, machined on the mounting face,
- the cylindrical housing (2) comprises an anchoring zone forming one or more cavities (201; 50) on said cylindrical housing (2), intended to correspond with said peripheral channel (102; 12),
- the antenna comprises an elastic ring (3; 4) engaged in said channel, which ring is capable of moving aside to permit the mounting of the antenna (1) on said cylindrical housing (2), then, by expansion, of engaging in said anchoring zone to immobilise the antenna (1) on its cylindrical housing (2).

2. An antenna according to Claim 1, characterised in that the elastic ring (3; 4) is formed by an O-ring seal (3), and in that said anchoring zone is a peripheral groove (201) receiving said O-ring seal (3).

3. An antenna according to Claim 2, characterised in that it cooperates with said cylindrical housing (2) to form a collecting trough (21) for the lubricants escaping from the bearings (22) present in the wheel carrier.

4. An antenna according to Claim 3, characterised in that the body (10) of the antenna (1) comprises a chamfer formed on the opposite face to the mounting face.

5. An antenna according to Claim 1, characterised in that the elastic ring (3; 4) is formed by a spring of generally circular appearance (4), formed from a profiled bar, comprising undulations.

6. An antenna according to Claim 5, characterised in that said anchoring zone is formed by a plurality of punctual cavities (50) all arranged on the cylindrical housing (2) in one and the same plane perpendicular to the axis of rotation of said cylindrical housing (2), and in that some of the undulations of the spring (4) form peaks (40) engaging in said punctual cavities (50).

## Patentansprüche

1. Antenne (1, 1F, 1R) für die Kopplung ohne galvanischen Kontakt zwischen dem drehbeweglichen und dem festen Bereich einer Reifenüberwachungsvorrichtung eines Fahrzeugs, die aus einem Kôrper (10) aus isolierendem Material gebildet ist, der eine elektrische Kopplungseinrichtung (11) aus leitendem Material trägt und eine zylindrische Montagefläche (100) hat, welche Antenne (1) vorgesehen ist, um in einer zylindrischen Aussparung (2) des festen oder des drehbeweglichen Bereichs montiert zu werden, wobei die zylindrische Aussparung (2) mit der zylindrischen Montagefläche (100) korrespondiert,
dadurch gekennzeichnet, daß
- die zylindrische Montagefläche (100) bemessen ist, um sich unter Freilassung eines Spiels an die zylindrische Aussparung (2) anzupassen,
- der Körper (10) der Antenne (1) eine an der Montagefläche gebildete durchgehende oder nichtdurchgehende umlaufende Rille (102; 12) aufweist;
- die zylindrische Aussparung (2) einen Verankerungsabschnitt aufweist, der einen oder mehrere Hohlräume (201; 50) an der zylindrischen Aussparung (2) bildet, die vorgesehen sind, um mit der umlaufenden Rille (102; 12) korrespondierend angeordnet zu werden;
- die Anenne einen federnden Ring (3; 4) aufweist, der in die Rille eingreift und eindrückbar ist, um die Montage der Antenne (1) an der zylindrischen Aussparung (2) zu ermöglichen und dann durch Ausdehnung in den Verankerungsabschnitt einzugreifen, um die Antenne (1) an der zylindrischen Aussparung (2) zu arretieren.

2. Antenne nach Anspruch 1, dadurch gekennzeichnet, daß der federnde Ring (3; 4) aus einer torusförmigen Dichtung (3) besteht, und daß der Verankerungsabschnitt eine umlaufende Nut (201) ist, die die torusförmige Dichtung (3) aufnimmt.

3. Antenne nach Anspruch 2, dadurch gekennzeichnet, daß sie mit der zylindrischen Aussparung (2) zusammenwirkt, um einen Auffangbehälter (21) für Schmiermittel zu bilden, das aus einem Lager (22) im Radhalter entweicht.

4. Antenne nach Anspruch 3, dadurch gekennzeichnet, daß der Körper (10) der Antenne (1) eine Fase an der der Montagefläche gegenüberliegenden Seite aufweist.

5. Antenne nach Anspruch 1, dadurch gekennzeichnet, daß der federnde Ring (3; 4) aus einer im wesentlichen kreisförmigen Feder (4) besteht, die aus einer Profilstange gebildet ist und Krümmungen aufweist.

6. Antenne nach Anspruch 5, dadurch gekennzeichnet, daß der Verankerungsabschnitt aus mehreren punktuellen Hohlräumen (50) besteht, die alle an der zylindrischen Aussparung (2) in ein und derselben Ebene senkrecht zur Drehachse der zylindrischen Aussparung (2) angebracht sind, und daß einige der Krümmungen der Feder (4) Spitzen (40) bilden, die in die punktuellen Hohlräume (50) eingreifen.
